(19) Europäisches Patentamt
European Patent Office
Office européen des brevets

(11) **EP 3 198 113 B1**

(12) **FASCICULE DE BREVET EUROPEEN**

(45) Date de publication et mention
de la délivrance du brevet:
**06.05.2020 Bulletin 2020/19**

(21) Numéro de dépôt: **14793221.4**

(22) Date de dépôt: **25.09.2014**

(51) Int Cl.:
*G01F 25/00* (2006.01)    *G01F 1/74* (2006.01)
*G01F 1/34* (2006.01)    *E21B 47/10* (2012.01)
*E21B 43/00* (2006.01)    *C10G 1/00* (2006.01)
*G01F 7/00* (2006.01)

(86) Numéro de dépôt international:
**PCT/FR2014/052417**

(87) Numéro de publication internationale:
**WO 2016/046454 (31.03.2016 Gazette 2016/13)**

(54) **PRODUCTION D'HYDROCARBURES AVEC COMPTEUR MÉTRIQUE**

ERDÖLFÖRDERUNG MIT DURCHFLUSSMESSER

OIL PRODUCTION WITH FLOWMETER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**02.08.2017 Bulletin 2017/31**

(73) Titulaire: **Total S.A.**
**92400 Courbevoie (FR)**

(72) Inventeurs:
• **COUDROY, Cécile**
**F-64300 Orthez (FR)**
• **COUPUT, Jean Paul**
**F-64018 Pau (FR)**
• **CAULIER, Renaud**
**F-64018 Pau (FR)**
• **ARENDO, Vincent**
**F-64018 Pau (FR)**

(74) Mandataire: **Bandpay & Greuter**
**30, rue Notre-Dame des Victoires**
**75002 Paris (FR)**

(56) Documents cités:
**WO-A1-2007/116008    WO-A1-2008/104750**

• "Data Reconciliation in Flow Data Reconciliation in Flow Measurement Measurement Contents", , 9 juin 2010 (2010-06-09), XP055193972, Extrait de l'Internet: URL:http://www.tuvnel.com/_x90lbm/OGFG_Data_Reconcilliation_in_Flow_Measurement.pdf [extrait le 2015-06-05]
• S R Den Bleker: "AES/PE/14-11 Definition and evaluation of production test validation methods Applied to Vx multiphase flow meters", , 22 août 2014 (2014-08-22), pages 1-64, XP055193793, Extrait de l'Internet: URL:http://repository.tudelft.nl/assets/uu id:d68612c6-42ef-45a9-b3e2-bf54a2fcb745/De nBleker_Thesis_Final.pdf [extrait le 2015-06-04]
• Anton Petukov ET AL: "SPE 144197 Virtual Metering System Application in the Ceiba Field, Offshore Equatorial Guinea", , avril 2011 (2011-04), pages 1-21, XP055194040, Extrait de l'Internet: URL:https://www.onepetro.org/download/conf erence-paper/SPE-144197-MS?id=conference-p aper/SPE-144197-MS [extrait le 2015-06-05]
• Aymeric Preveral ET AL: "SPE 167844 Geographically-Distributed Databases: A Big Data Technology for Production Analysis in the Oil & Gas Industry", , avril 2014 (2014-04), pages 1-9, XP055194041, Extrait de l'Internet: URL:http://cas.ensmp.fr/~petit/papers/spe1 4/main.pdf [extrait le 2015-06-05]

**Description**

La présente invention concerne le domaine de la production d'hydrocarbures, et plus précisément un procédé de production d'hydrocarbures sur une ligne d'une installation de production d'hydrocarbures comprenant au moins deux dispositifs adaptés à fournir chacun une estimation du débit d'un fluide dans la ligne et incluant au moins un compteur métrique.

Les installations de production d'hydrocarbures comprennent des lignes dans lesquelles circulent des fluides. Il peut s'agir de lignes de production comprenant un puits de production et dans lesquelles circulent des hydrocarbures depuis un réservoir d'hydrocarbures vers une tête de puits. Il peut également s'agir de lignes d'injection comprenant un puits d'injection et dans lesquelles circulent des fluides d'injection, c'est-à-dire des fluides que l'on souhaite injecter dans le réservoir, par exemple un mélange eau-polymères (dans le cadre de la récupération assistée notamment).

Il est aujourd'hui courant de chercher à fournir une estimation du débit du fluide circulant dans une telle ligne. En effet, l'estimation du débit fournie permet de manière connue une meilleure gestion de la ligne. On obtient ainsi un meilleur contrôle ou une meilleure connaissance de la production globale de l'installation, grâce à l'estimation potentiellement fournie pour chaque ligne, typiquement en temps réel et ligne par ligne.

Une méthode d'estimation et d'optimisation des débits de fluides circulant dans un réseau de puits de production d'hydrocarbures est divulguée par exemple dans la publication WO 2007/116008 A1. Par ailleurs, les principes d'une méthode visant a identifier des instruments de mesure défectueux dans un réseau de tubes transportant des écoulements pétroliers sont divulgués par la présentation "Data Reconciliation in Flow Measurement", Oil & Gas Focus Group, 9th June 2010 de TÜV SUD National Engineering Laboratory.

Une approche consiste à rechercher une estimation du débit du fluide par le biais d'un dispositif et en fonction de données respectives au dispositif, grâce à un modèle thermodynamique prévu à cet effet, le dispositif (intégré à la ligne) et les données respectives n'étant initialement pas prévus pour cela. On obtient alors un compteur « virtuel ». Dans ce cadre, certaines solutions utilisent plusieurs modèles de la sorte, basés sur des données respectives à des dispositifs différents, et chaque modèle donne théoriquement une estimation différente du débit pour des conditions de production (e.g. fractions gaz/huile/eau) données équivalentes. Typiquement, au maximum deux ou trois modèles sont choisis et les données relatives aux conditions de production (fraction eau/huile/gaz) sont corrigées afin que les estimations de débits soient similaires. Cette approche n'est pas entièrement satisfaisante, en ce sens que l'estimation du débit fournie n'est pas suffisamment proche du débit réel.

Une autre approche consiste à utiliser un compteur métrique disposé dans la ligne dont on veut connaître le débit. Les compteurs métriques sont des dispositifs adaptés à effectuer une mesure sur le fluide circulant dans la ligne, et à fournir directement une estimation du débit du fluide dans la ligne en fonction (au moins) de la mesure. Les compteurs métriques connus utilisent également la valeur d'au moins un paramètre, appelé communément « paramètre de calibration ». Un compteur métrique peut notamment effectuer pour cela une ou plusieurs mesures physiques (e.g. électriques, nucléaires, et/ou optiques, par exemple des mesures de permittivité, de conductivité, et/ou d'atténuation gamma). Un tel compteur métrique peut pour des raisons diverses fournir une estimation qui n'est pas entièrement satisfaisante. Par exemple, il est nécessaire qu'une valeur la plus correcte possible soit attribuée aux paramètres de calibration, faute de quoi l'estimation du débit du fluide dans la ligne fournie par le compteur métrique serait trop éloignée de la réalité et par conséquent inexploitable. Cela est d'autant plus vrai lorsque l'on considère des compteurs de gaz torché ou des compteurs fiscaux pour lesquels il est particulièrement critique qu'une estimation proche de la réalité soit réalisée. Or, le paramètre de calibration peut souvent être erroné, par exemple à cause d'une dérive des capteurs.

Le but de la présente invention est de fournir une solution simple à mettre en œuvre pour estimer le débit d'un fluide dans une ligne d'une installation de production d'hydrocarbures, lors de la production, de la manière la plus correcte possible.

A cette fin, la présente invention propose un procédé de production d'hydrocarbures sur une ligne d'une installation de production d'hydrocarbures comprenant au moins deux dispositifs adaptés à fournir chacun une estimation du débit d'un fluide dans la ligne en fonction de données respectives. Les dispositifs incluent au moins un compteur métrique et les données respectives à la fourniture d'une estimation du débit par le compteur métrique incluent une mesure réalisée par au moins un capteur du compteur métrique sur le fluide. Le procédé comprend, pendant la production, la détermination des données respectives à la fourniture d'une estimation du débit par les dispositifs, et un processus de réconciliation et validation de données impliquant les données déterminées, la réconciliation étant conditionnée par une égalité au moins substantielle entre les estimations du débit du fluide à fournir par chacun des dispositifs.

L'invention propose également un programme d'ordinateur, adapté à être enregistré sur une mémoire d'enregistrement de données, comprenant des instructions pour exécuter le procédé.

L'invention propose également un système adapté à communiquer avec au moins deux dispositifs adaptés à fournir chacun une estimation du débit d'un fluide dans une ligne de production d'hydrocarbures en fonction de données respectives, les dispositifs incluant au moins un compteur métrique et les données respectives à la fourniture d'une estimation du débit par le compteur métrique incluant une mesure réalisée par au moins un capteur du compteur métrique sur le fluide, le système comprenant une mémoire ayant enregistré le programme.

L'invention propose également une installation de production d'hydrocarbures. L'installation comprend une ligne comprenant au moins deux dispositifs adaptés à fournir chacun une estimation du débit d'un fluide dans une ligne de production d'hydrocarbures en fonction de données respectives, les dispositifs incluant au moins un compteur métrique et les données respectives à la fourniture d'une estimation du débit par le compteur métrique incluant une mesure réalisée par au moins un capteur du compteur métrique sur le fluide. L'installation comprend également le système, le système étant alors adapté à communiquer avec les dispositifs de la ligne.

Suivant des modes de réalisation préférés, l'invention comprend une ou plusieurs des caractéristiques suivantes :

- le processus de réconciliation et validation de données minimise une fonction de coût pénalisant, pour chaque donnée réconciliée, la différence entre sa valeur avant réconciliation et sa valeur réconciliée ;
- la différence est pondérée dans la fonction de coût par une incertitude relative à ladite donnée réconciliée ;
- le procédé comprend en outre une détection de toute donnée réconciliée pour laquelle la différence entre sa valeur avant réconciliation et sa valeur réconciliée est supérieure à un seuil dépendant de l'incertitude relative à la donnée réconciliée ;
- le procédé comprend la réitération du processus de réconciliation et validation de données en ôtant la donnée réconciliée ayant le plus de poids dans la valeur de la fonction de coût, tant que la valeur de la fonction de coût est supérieure à un seuil prédéterminé ;
- le procédé comprend en outre la fourniture de la valeur réconciliée du débit de fluide dans la ligne ;
- le procédé comprend en outre la fourniture d'une incertitude relative à la valeur réconciliée du débit de fluide dans la ligne fonction de la différence entre sa valeur avant réconciliation et sa valeur réconciliée ;
- les dispositifs comprennent, outre le compteur métrique, au moins une duse, un dispositif associé à un module d'afflux, et/ou une conduite ;
- la mesure réalisée par le capteur du compteur métrique sur le fluide est une mesure électrique, nucléaire et/ou optique ;
- la duse est adaptée à fournir une estimation du débit du fluide dans la ligne en fonction d'une ouverture de vanne et d'une mesure réalisée par au moins un capteur sur le fluide fournissant les pertes de charge associées à l'ouverture de vanne ;
- le dispositif associé au module d'afflux est adapté à fournir une estimation du débit du fluide dans la ligne en fonction d'une mesure de pression réalisée par au moins un capteur sur le fluide et de propriétés physico-chimiques du fluide ; et/ou
- la conduite est adaptée à fournir une estimation du débit du fluide dans la ligne en fonction de propriétés géométrique et/ou mécaniques de la conduite et d'une mesure réalisée par au moins un capteur sur le fluide fournissant les pertes de charge et/ou de température associées aux propriétés géométrique et/ou mécaniques de la conduite.

D'autres caractéristiques et avantages de l'invention apparaîtront à la lecture de la description qui suit d'un mode de réalisation préféré de l'invention, donnée à titre d'exemple et en référence au dessin annexé.

La figure 1 représente un schéma du procédé.
Les figures 2 à 3 illustrent le fonctionnement d'un exemple de compteur métrique.
La figure 4 représente un schéma d'un exemple d'une installation de production d'hydrocarbures.
La figure 5 représente un exemple de ligne sur laquelle le procédé peut être mis en œuvre.

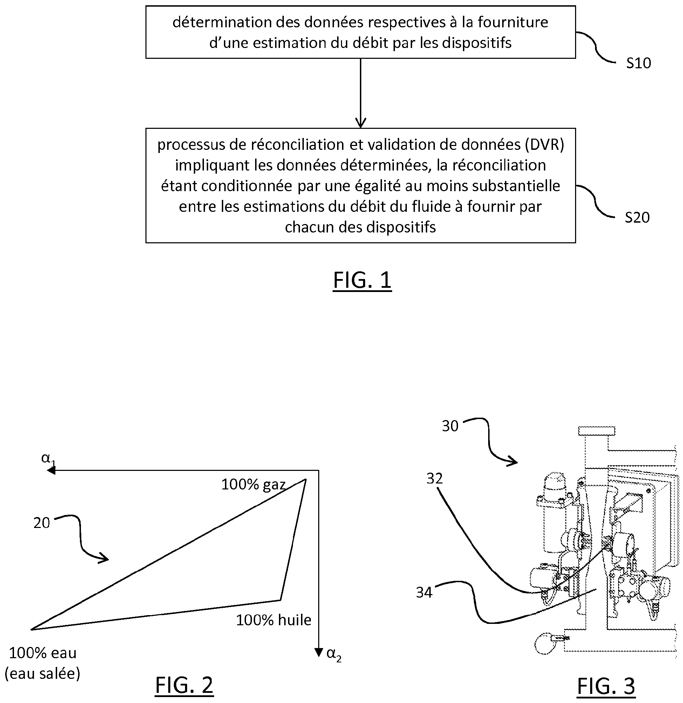

La figure 1 montre le procédé de production d'hydrocarbures. Les étapes du procédé sont mises en œuvre sur une ligne d'une installation de production d'hydrocarbures comprenant au moins deux dispositifs. Chacun des dispositifs est adapté à fournir une estimation du débit d'un fluide dans la ligne en fonction de données respectives. Les dispositifs incluent au moins un compteur métrique. Les données respectives à la fourniture d'une estimation du débit par le compteur métrique incluent une mesure réalisée par au moins un capteur du compteur métrique sur le fluide. Le procédé comprend, pendant la production, la détermination S10 des données respectives à la fourniture d'une estimation du débit par les dispositifs, et un processus de réconciliation et validation de données (DVR) S20. Le processus de DVR implique les données déterminées, et la réconciliation est conditionnée par une égalité au moins substantielle entre les estimations du débit du fluide à fournir par chacun des dispositifs. Le procédé de la figure 1 permet une estimation du débit du fluide dans la ligne simple à mettre en œuvre et relativement correcte (i.e. relativement proche de la valeur réelle du débit).

En effet, le procédé s'inscrit dans le contexte où la ligne de l'installation de production d'hydrocarbures dans laquelle circule le fluide dont on doit estimer le débit comprend un compteur métrique. L'expression « compteur métrique », comprise de l'homme du métier, désigne les dispositifs mentionnés plus haut. Le compteur métrique peut donc notamment effectuer, pour fournir une estimation du débit, une ou plusieurs mesures physiques sur le fluide (e.g. électriques, nucléaires, et/ou optiques, par exemple des mesures de permittivité, de conductivité, et/ou d'atténuation gamma), et le compteur peut utiliser des valeurs prédéterminées de paramètres de calibration et/ou des hypothèses fluides prédéterminées. Ainsi, le procédé dispose déjà d'une estimation relativement bonne du débit. Toutefois, le procédé va plus loin car il tient compte d'au moins un autre dispositif de la ligne adapté à fournir une estimation du débit du fluide pour améliorer l'estimation. Notamment, il met en œuvre un processus de DVR dont la réconciliation est conditionnée par une égalité au moins substantielle entre les estimations du débit du fluide à fournir par chacun des dispositifs (dont le compteur métrique). Ainsi, le procédé utilise la redondance d'informations fournie par plusieurs dispositifs pour améliorer l'estimation. Par ailleurs, le processus de DVR impliquant les données respectives à la fourniture d'une estimation du débit par chaque dispositif (et non pas seulement les estimations fournies), ces données sont directement remises en question, ce qui permet d'obtenir une meilleure estimation. Ces données peuvent comprendre des mesures dont la remise en question améliore l'estimation. Notamment, la mesure réalisée par le capteur du compteur métrique est elle aussi remise en question dans le processus de DVR, contrairement à une approche naïve où la valeur de débit fournie par le compteur métrique serait la seule donnée intégrée au processus de DVR.

Ainsi, l'estimation de débit réalisée par le procédé peut être mise en œuvre au sein d'un procédé plus global de production d'hydrocarbures pour améliorer la production, ladite production étant réalisée par l'installation de production d'hydrocarbures intégrant la ligne. Le procédé peut par exemple comprendre la fourniture, par exemple à une centrale de données, de la valeur réconciliée du débit de fluide dans la ligne, c'est-à-dire une valeur correspondant aux estimations du débit fournies par les différents dispositifs une fois leurs données respectives réconciliées (par exemple une moyenne), sachant que ces estimations sont au moins substantiellement égales de par la définition même du processus de réconciliation. Cela permet une étude de la production par des spécialistes à qui l'on fournirait la valeur réconciliée. Le procédé peut également comprendre la fourniture d'une incertitude relative à la valeur réconciliée du débit de fluide dans la ligne. L'incertitude peut être fonction de la différence entre la valeur avant réconciliation du débit et la valeur réconciliée du débit. La valeur avant réconciliation peut être la valeur fournie par le compteur métrique, sans tenir compte de la réconciliation. Alternativement, la valeur avant réconciliation peut désigner un vecteur constitué de chacune des valeurs du débit qui aurait été fournie par un dispositif respectif sans la réconciliation (cette estimation sans réconciliation, donc relativement erronée, peut être calculée en parallèle de la valeur réconciliée issue du processus de DVR). Ainsi, le procédé peut fournir une incertitude par dispositif fournissant une estimation respective, en fonction de la différence entre la valeur avant réconciliation fournie par le dispositif et la valeur réconciliée. Cela permet de détecter les dispositifs fournissant les estimations les moins correctes, par exemple avec des comparaisons classiques entre les différentes valeurs fournies. Ainsi, le procédé de la figure 1 permet une meilleure gestion de la ligne, de l'installation, et donc de la production.

Comme expliqué plus haut, l'estimation du débit dans une ligne d'une installation de production d'hydrocarbures grâce notamment à l'intégration d'un compteur métrique à la ligne permet une meilleure gestion de la ligne, avec un meilleur contrôle ou une meilleure connaissance de la production globale de l'installation et/ou des quantités de fluides injectés, e.g. en temps réel et/ou ligne par ligne. Le procédé de la figure 1 permet alors d'améliorer les estimations fournies pour chaque ligne sur laquelle il est mis en œuvre, ce qui améliore la gestion globale de la production. Ainsi, le procédé peut être mis en œuvre pendant la production sur plusieurs lignes, d'injection et/ou de production, les étapes S10 et S20 étant exécutées pour chaque ligne indépendamment des autres lignes, typiquement en continu. Les estimations de débit fournies pour chaque ligne suite à la réconciliation peuvent alors être centralisées pour gérer la production.

Le fluide circulant dans la ligne peut être monophasique, et dans ce cas une estimation du débit du fluide dans la ligne consiste à simplement fournir une valeur pour le débit de la seule phase du fluide. C'est typiquement le cas d'une ligne d'injection. Un compteur peut effectuer cette estimation sur la base de n'importe quel modèle utilisant une mesure réalisée sur le fluide par au moins un capteur du compteur. Le modèle peut impliquer en outre la valeur d'au moins un paramètre de calibration qui correspond à la mesure du capteur sous une condition prédéterminée d'écoulement du fluide dans la ligne (par exemple un débit ou une vitesse d'écoulement prédéterminés).

Alternativement, le fluide circulant dans la ligne peut être multiphasique. C'est typiquement le cas d'une ligne de production, car les hydrocarbures produits comprennent habituellement une phase eau, une phase gaz et une phase huile. Dans ce cas, l'estimation du débit du fluide dans la ligne peut consister à fournir les informations permettant de déterminer le débit de chaque phase. Ces informations peuvent comprendre directement une estimation du débit de chaque phase, et/ou une estimation de la fraction (e.g. instantanée) de chaque phase dans le fluide multiphasique en supplément du débit cumulé (e.g. instantané) du mélange multiphasique dans la ligne. Il suffit dans le deuxième cas d'une simple multiplication entre la fraction d'une phase respective et le débit cumulé pour obtenir le débit de la phase respective. On parle pour le compteur métrique, dans le cas de fluide multiphasique, de compteur multiphasique, appelé communément compteur MPFM (acronyme provenant de l'anglais « multiphase Flowmeter »). Il peut s'agir par exemple d'un débitmètre massique ou d'un analyseur. Un tel compteur implique des technologies complexes, et les mesures données par le ou les capteur(s) inclus dans un tel compteur sont notamment très sensibles aux propriétés des fluides.

Par conséquent, il arrive souvent que le compteur n'utilise pas les bons paramètres de calibration et/ou certains de ces capteurs peuvent dériver plus vite que prévu, et ainsi que le compteur fournisse une valeur relativement inexacte du débit du fluide. Le procédé de la figure 1 permet de pallier à ce problème.

Le compteur peut notamment fonctionner suivant le principe suivant, décrit en référence aux figures 2-4.

Le capteur du compteur métrique peut être un capteur gamma classique, envoyant des ondes à travers le fluide au niveau du capteur et mesurant l'atténuation massique de l'onde. Le capteur peut être adapté à envoyer plusieurs niveaux d'énergie, de manière à permettre un recoupement d'information suffisant pour un fluide multiphasique. On note ci-dessous $\alpha$ l'atténuation linéaire en m$^{-1}$, $\mu$ l'atténuation massique en m$^2$/kg, et $\rho$ la densité volumique en kg/m$^3$. On a par définition $\alpha = \mu * \rho$. L'atténuation massique $\mu$ dépend du composé et du niveau d'énergie gamma.

Pour le fluide hydrocarbure de l'exemple ci-dessus (une phase eau, une phase huile, et une phase gaz), il suffit au capteur d'être capable de faire au moins deux mesures (e.g. correspondant à deux niveaux d'énergie différents). Ces mesures font alors partie des données impliquées par le processus de DVR du procédé de la figure 1. On parle classiquement de niveau d'énergie bas et de niveau d'énergie haut (ou moyen), correspondant respectivement aux indices 1 et 2 dans les notations ci-dessous. Les paramètres de calibration comprennent alors une valeur d'atténuation pour chaque phase pure, par niveau d'énergie, que l'on peut noter $\mu_{gaz\_1}$, $\mu_{gas\_2}$, $\mu_{huile\_1}$, $\mu_{huile\_2}$, $\mu_{eau\_1}$ et $\mu_{eau\_2}$, et ils peuvent eux aussi être impliqués dans le processus de DVR. Ainsi, $\mu_{ph\_i}$ est l'atténuation massique $\mu$ mesurée par le capteur pour le niveau d'énergie $i$, en présence de la seule phase *ph.*

Il est à noter que si, pour une installation de production d'hydrocarbures donnée, la salinité des puits est différente d'un puit à l'autre, alors ces paramètres peuvent varier. A contrario, deux puits avec la même salinité devraient avoir les mêmes valeurs d'atténuation eau pour une même installation de production. En outre, il est à noter que le capteur peut en fait mesurer également un troisième niveau d'énergie, par exemple encore plus haut que les deux autres. A un tel niveau d'énergie, et en général aux niveaux d'énergie particulièrement élevés (e.g. N > 250-300keV) les différents composés absorbent sensiblement la même quantité d'énergie (on pourrait traduire cela par le fait que les atténuations massiques sont environ égales à ce niveau d'énergie). Un compteur peut toutefois exploiter cette énergie pour valider son estimation du débit et/ou des fractions eau, huile et gaz fournie(s) sur la base des deux autres niveaux d'énergie, de préférence avec une forte incertitude. Il est également possible de relier la mesure effectuée pour ce troisième niveau d'énergie à la densité du mélange par une droite obtenue après calibration.

Grâce à la connaissance des paramètres $\mu_{gaz\_1}$, $\mu_{gas\_2}$, $\mu_{hulle\_1}$, $\mu_{huile\_2}$, $\mu_{eau\_1}$ et $\mu_{eau\_2}$, on peut tracer un triangle dit « triangle de calibration » sur la base des six valeurs suivantes :

- $\alpha_{gaz\_1} = \mu_{gaz\_1} {}^* \rho_{gaz}$
- $\alpha_{gaz\_2} = \mu_{gaz\_2} {}^* \rho_{gaz}$
- $\alpha_{huile\_1} = \mu_{huile\_1} {}^* \rho_{huile}$
- $\alpha_{huile\_2} = \mu_{huile\_2} {}^* \rho_{huile}$
- $\alpha_{eau\_1} = \mu_{eau\_1} {}^* \rho_{huile}$
- $\alpha_{eau\_2} = \mu_{eau\_2} {}^* \rho_{huile}$

Les densités volumiques $\rho$ sont des variables qui dépendent des valeurs de pression P et de température T de la ligne où le compteur opère et de la composition du fluide, informations données par ailleurs (e.g. par une mesure effectuée par des capteurs dédiés, e.g. par d'autres dispositifs, par exemple l'un ou plusieurs de ceux adaptés à fournir une autre estimation du débit, notamment par exemple pour P et T, ou par une valeur prédéterminée, notamment par exemple pour le GOR - ratio gaz/huile de l'hydrocarbure à l'exclusion de l'eau, de l'anglais « gaz/oil ratio » - et/ou la salinité qui sont des hypothèses fluide prédéterminées) et donc connues du compteur métrique qui peut donc en déduire les densités volumiques $\rho$. Ainsi si les conditions opératoires P et T changent et/ou si la composition du fluide (GOR, salinité) change, le triangle de calibration est également modifié, car les densités gaz, huile et eau varient. Ainsi les atténuations linéaires varient également. En ce sens, les densités volumiques sont des paramètres de calibration qui correspondent notamment à des hypothèses fluide prédéterminées (GOR et salinité). Une partie ou toutes ces données peuvent faire elles aussi partie des données impliquées par le processus de DVR. La figure 2 montre schématiquement un triangle de calibration 20 correspondant à une telle calibration, avec des sommets de coordonnées ($\alpha_{gaz\_1}$, $\alpha_{gas\_2}$), ($\alpha_{huile\_1}$, $\alpha_{huile\_2}$), et ($\alpha_{eau\_1}$, $\alpha_{eau\_2}$), correspondant donc aux six valeurs listées ci-dessus.

La figure 3 montre un exemple du compteur : le compteur 30. Pour réaliser la calibration, le compteur 30 peut recevoir un échantillon 34 de chacune des phases. Ensuite, le compteur 30 mesure à S20, grâce à un capteur 32 prévu à cet effet, les atténuations massiques de chacune des phases, ce qui permet de déterminer S30 les paramètres de calibration (i.e. les atténuations linéaires, et/ou les atténuations massiques elles-mêmes, suivant le point de vue retenu, sachant que l'une ou l'autre de ces données peut être enregistrée par le compteur comme paramètre de calibration, quitte à ensuite effectuer le calcul adéquat). En cours d'utilisation, le compteur 30 mesure une atténuation massique du fluide (qui est alors un mélange multiphasique). Le détecteur du capteur 32 mesure et enregistre des « counts » $N^1_{counts}$ pour chaque niveau d'énergie (au moins les niveaux 1 « bas » et 2 « haut », mais possiblement un niveau encore plus élevé également).

Grâce aux équations suivantes :

$$N^i_{counts} = N^i_0 * decay * exp [- (x_{eau} * \mu_{eau-i} * \rho_{eau} + x_{gaz} * \mu_{gaz-i} * \rho_{gaz} +$$
$$x_{huile} * \mu_{huile-i} * \rho_{huile}) \times Dthroat]$$

pour i = 1 et 2,
et

$$x_{eau} + x_{gaz} + x_{huile} = 1,$$

avec $x_{eau}$, $x_{gaz}$ et $x_{huile}$ qui désignent les fractions de chacune des phases, les densités volumiques $\rho$ qui sont prédéterminées et données par la composition et la thermodynamique, et $N^i_0$, decay et Dthroat qui sont connus, (Ni0 étant le nombre de counts donc atténuation à vide, decay étant une valeur correspondant à la prise en compte du déclin de la source, Dthroat étant le diamètre de la gorge du Venturi) le compteur 30 peut déterminer les fractions instantanées de chacune des phases.

Un programme d'ordinateur peut être prévu pour exécuter le procédé. Ce programme est de manière connue en informatique adapté à être enregistré sur une mémoire d'enregistrement de données et peut comprendre des instructions pour exécuter le procédé, notamment les étapes S10 et S20. Ainsi, tout système informatique peut comprendre une mémoire ayant enregistré le programme. Dans tous les cas, le programme d'ordinateur est prévu pour commander l'exécution du procédé par un système prévu à cet effet. Le système (qui peut être l'un des dispositifs comme par exemple le compteur métrique) est adapté à communiquer avec les (autres) dispositifs adaptés à fournir l'estimation du débit dont les estimations sont réconciliées, dont potentiellement le compteur métrique. Ce programme est de manière connue en informatique adapté à être enregistré sur une mémoire d'enregistrement de données et peut comprendre des instructions. Ainsi, le programme d'ordinateur est enregistré par une mémoire du compteur métrique ou par une mémoire d'un autre système adapté à communiquer notamment avec le compteur métrique. Le système peut typiquement comprendre un processeur et un émetteur-récepteur pour la communication à distance. Le programme d'ordinateur peut comprendre tout type d'instructions connues en informatique. Ces instructions peuvent être des lignes de code, écrites dans tout langage informatique, par exemple orienté objet, possiblement sous forme de code source, code compilé ou code précompilé. Il peut également s'agir de programme d'installation (i.e. rendant un compteur métrique ou un système adapté à exécuter le procédé ou à en commander l'exécution). Le programme peut être tangiblement enregistré sur une mémoire de stockage adaptée à cela. Il peut s'agir d'une mémoire volatile ou non volatile, par exemple EPROM, EEPROM, mémoire flash, ou disques CD-Rom.

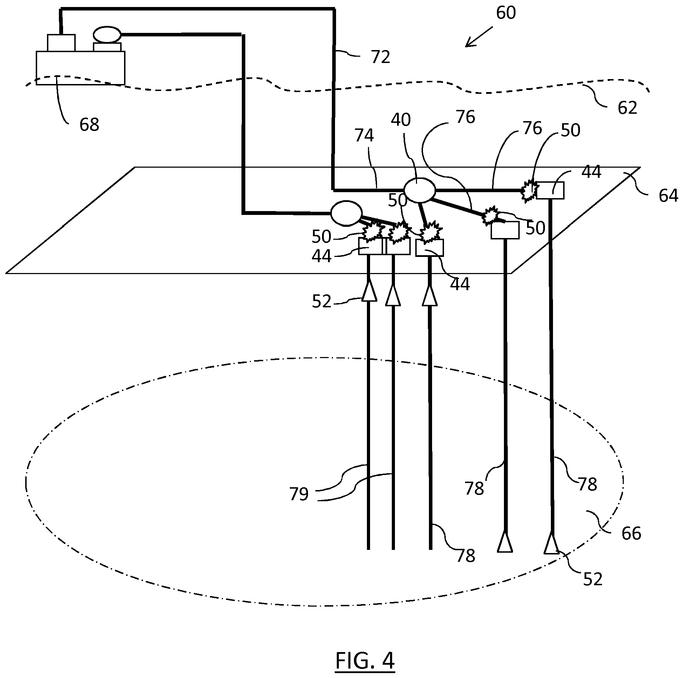

La figure 4 représente un exemple d'une installation de production d'hydrocarbures comprenant plusieurs compteurs métriques, dans laquelle le procédé peut être mis en œuvre.

L'installation 60 comprend une ligne de production d'hydrocarbure, constituée de plusieurs conduites dans lesquelles le fluide s'écoule, les conduites constituant ainsi chacune une (sous-)ligne de production respective. La ligne de production comprend notamment plusieurs puits de production 78 de fluide débouchant depuis le réservoir 66 d'hydrocarbures. Trois puits de production 78 sont représentés sur la figure, mais tout nombre convenant à une couverture optimale du réservoir 66 est envisageable pour tenir compte de la complexité géologique du réservoir, de la qualité des fluides présents dans le réservoir, de la localisation géographique du réservoir (à terre, en mer, en mer très profonde), et des contraintes inhérentes. La ligne de production comprend une conduite de fluide 74 alimentée en fluide par un manifold 40. La conduite de fluide de production 74 est une conduite principale recevant le fluide depuis tous les puits de production 78 forés dans le réservoir 66 via un manifold (ici le manifold 40), faisant office de rassembleur. La conduite de fluide de production 74 se situe sur un fond marin 64, et alimente un « riser » 72 (i.e. une conduite sensiblement verticale) aboutissant à une station principale, e.g. en l'occurrence une unité flottante de production, de stockage et de déchargement 68 (connue sous le sigle FPSO, pour « Floating Production Storage and Offloading ») située à la surface marine 62. L'installation 60 comprend également une ligne d'injection comprenant plusieurs puits d'injection 79, et fonctionnant selon un principe symétrique à celui de la ligne de production.

L'installation 60 intègre (i.e. comprend) également, pour chaque puits de production 78 et chaque puits d'injection 79 un compteur métrique 50, tel que décrit précédemment. Le compteur métrique 50 est représenté sur la figure en amont des têtes de puits 44, à chaque fois sur une conduite de la ligne, mais il peut être à tout autre endroit convenable selon l'appréciation de l'homme du métier. En outre, l'installation 60 pourrait comprendre une quantité de compteurs métriques 50 inférieure ou supérieure à celle représentée sur la figure, selon les besoins de l'exploitation. L'installation 60 comprend également d'autres dispositifs 52 disposés sur les différentes lignes à tout endroit convenable à leur fonction (non détaillée ici), chacun étant adapté à fournir une estimation du débit dans la ligne où il est installé en sus de sa fonction. En tous les cas, l'installation 60 est adaptée à l'exécution du procédé de la figure 1 sur au moins une partie des lignes comprenant un compteur métrique 50, soit par les compteurs métriques 50 eux-mêmes qui ont alors un programme comprenant des instructions pour cela et sont adaptés à communiquer avec les dispositifs 52, ou par un système adapté à communiquer avec les compteurs métriques 50 et les dispositifs 52. L'installation 60 permet une meilleure production d'hydrocarbures, grâce à une bonne estimation ultérieure des débits.

Le processus de DVR S20 est maintenant discuté.

Le processus de réconciliation et validation de données (DVR) implique les données déterminées en S10. Cela signifie que le processus de DVR opère une remise en question de toutes ces données. En effet, les données « impliquées » par le processus de DVR sont, par définition, les variables du processus de DVR. La réconciliation est conditionnée par une égalité (e.g. au moins substantielle, i.e. avec une différence inférieure à une erreur prédéterminée, voire nulle) entre les estimations du débit du fluide à fournir par chacun des dispositifs. En d'autres termes, la DVR est faite sur l'hypothèse de base que les estimations du débit du fluide à fournir par chacun des dispositifs (indépendamment les uns des autres, c'est-à-dire en dehors de toute réconciliation) devraient être égales.

La DVR est un processus connu permettant de fournir des valeurs en entrées (i.e. les données impliquées, e. g. des mesures respectives aux dispositifs dont la mesure du capteur du compteur métrique, et *in fine* réconciliées par le processus) et de modifier ces valeurs selon des intervalles d'incertitudes prédéterminés et des contraintes prédéterminées, pour respecter une ou plusieurs condition(s) impliquant directement ou indirectement les valeurs en question. Cela peut se faire de manière efficace en minimisant une fonction de coût pénalisant, pour chaque donnée réconciliée, la différence entre sa valeur avant réconciliation et sa valeur réconciliée. Par ailleurs, pour une utilisation plus fine de la DVR, la différence peut être pondérée dans la fonction de coût par une incertitude relative à ladite donnée réconciliée. Plus l'incertitude est grande, moins la pénalité associée à la différence entre valeur avant réconciliation et valeur réconciliée est grande car ladite différence est plus « attendue » en théorie. Cette incertitude peut être déterminée de n'importe quelle manière, par exemple sur la base de connaissances prédéterminées, par exemple du géologue. Ainsi, on tient compte des particularités liées à chacune des données impliquée dans le processus de DVR.

Ainsi, le processus de DVR peut consister de manière générale en la résolution du programme de minimisation suivant :

$$\text{Min} \sum_{i} \left( \frac{k_i^* - k_i}{e_i} \right)^2$$

avec $k_i$ les données impliquées dans le processus (i.e. les données à réconcilier),
$e_i$ l'incertitude le la donnée i,
$k_i^*$ la valeur réconciliée de la donnée i,
$e_i^*$ l'incertitude réconciliée de la donnée i,
$y_j$ les variables non mesurées et donc par exemple calculées,

et le terme $\left( \frac{k_i^* - k_i}{e_i} \right)^2$ est appelé « pénalité »,

sous la contrainte mentionnée plus haut et liant les variables $k_i$ et $y_j$.

En effet, le procédé exécute une DVR pour « égaliser » certaines valeurs. Précisément, les données déterminées en S10 sont théoriquement censées donner le même résultat d'estimation du débit du fluide pour chaque dispositif respectif. Ainsi la somme des pénalités est minimisée en respectant, au moins sensiblement, cette contrainte d'égalité. En outre, le procédé de DVR peut comprendre une ou plusieurs contraintes d'inégalité de type $G(k_i^*, y_j) > 0$, qui correspondent par exemple aux bornes du système (e.g. le fait par exemple qu'une pression doit être supérieure à 0, qu'un ratio, tel le water-cut, doit être inférieur à 1). Cela permet de réduire le risque de réconciliation non réaliste.

La solution présentée peut dans un exemple considérer toutes les mesures, tous les modèles et tous les paramètres du système modélisés et prendre en compte leurs incertitudes respectives afin de fournir une estimation unique de chaque mesure ou de chaque paramètre calculable avec une incertitude calculée garantissant la qualité de la valeur finale. La redondance des mesures est alors un facteur clé. La réconciliation de plusieurs modèles et de mesures constitue une sorte de compteur virtuel avancé. Afin de s'affranchir des erreurs d'interprétation des calculateurs utilisés dans la plupart des compteurs, le procédé utilise les mesures brutes de chaque compteur et des équations bien définies qui sont réconciliées avec les autres données du système. Pour cela la méthodologie DVR est utilisée : l'idée de la DVR est d'utiliser la redondance de données d'un système comme source d'information pour corriger les mesures.

Chaque mesure est corrigée aussi faiblement que possible de sorte que les valeurs corrigées satisfassent toutes les contraintes du processus. Le procédé proposé fonctionne principalement en régime permanent. Toutefois, certains régimes transitoires dûs à des opérations peuvent être détectés automatiquement (ex : démarrage d'un puits) et les mesures et les modèles influencés par ces régimes sont alors soit sortis de la réconciliation, soit les incertitudes associées sont augmentées pour faire comprendre à l'optimiseur que ces données ne sont pas dans leur gamme de précision habituelle. Enfin, la méthodologie DVR utilisée gère dans un exemple les temps de résidence des fluides de production lorsque les longueurs de ligne sont importantes : ainsi, les débits au niveau du traitement surface au temps t seront réconciliés avec des débits au niveau des puits au temps t - 2h par exemple. En d'autres termes, le procédé peut dans un exemple veiller à ce que les données déterminées en S10 et donc impliquées en S20 soit toutes respectives à la fourniture d'estimations différentes du débit, ces estimations différentes étant relatives au débit à un même instant.

Le procédé peut comprendre une détection de toute donnée réconciliée pour laquelle la différence entre sa valeur avant réconciliation et sa valeur réconciliée est supérieure à un seuil dépendant de l'incertitude relative à la donnée réconciliée. Ainsi, le procédé détecte les données déterminées en S10 trop éloignées de leur valeur réconciliée, l'éloignement étant envisagé en fonction de l'incertitude relative à la donnée. On peut alors réitérer le processus de DVR en S20, en ôtant (à chaque réitération) la donnée réconciliée ayant le plus de poids dans la valeur de la fonction de coût. On peut effectuer cette réitération tant que la valeur de la fonction de coût est supérieure à un seuil prédéterminé. Cela permet d'affiner l'estimation du débit, en omettant les données déterminées en S10 trop peu fiables.

Dans un exemple, la réconciliation est effectuée avec toutes les données du modèle et leurs incertitudes. Si une donnée est corrigée dans un intervalle deux fois supérieur à son incertitude originale, elle est détectée et donc considérée comme suspecte. Une autre détection peut être déclenchée lorsque la somme des pénalités de la réconciliation est supérieure à une valeur définie. Si cette détection est activée, la donnée la plus pénalisée sera mise en silence et une nouvelle réconciliation s'effectuera sans qu'elle y soit intégrée. Lorsque cette autre détection n'est pas activée, la réconciliation va au bout mais affiche une forte pénalité. Dans ce cas pour savoir quelle mesure est erratique une analyse détaillée peut être effectuée en regardant en priorité les données qui afficheront les plus grosses pénalités. Le procédé permet donc dans un exemple la surveillance et le suivi de tous les capteurs à distance (e.g. même en autre lieu), d'identifier les capteurs défaillants à distance, et de faire un suivi de la qualité des mesures à l'aide des incertitudes calculées. Le procédé peut dans un exemple aussi calculer des valeurs de remplacement aux endroits où les capteurs sont défaillants et aux endroits où aucun capteur n'a été mis en place. Le procédé peut dans un exemple utiliser les mesures brutes des compteurs pour éviter des erreurs d'interprétation des calculateurs. Le procédé peut dans un exemple fournir des valeurs et des incertitudes validées à toutes les données du système. Le procédé permet dans un exemple une réallocation de la production par lignes et par puits plus fiable.

Les données impliquées dans le processus de DVR et déterminées en S10 sont maintenant discutées.

Ces données sont, pour chaque dispositif considéré, les données de base qui permettent au dispositif de fournir une estimation du débit dans la ligne. Une même donnée peut constituer une donnée de base pour plusieurs dispositifs. Par « donnée de base », l'homme du métier comprend qu'il s'agit d'une variable fondamentale permettant de calculer un débit en fonction de modèles physiques, par exemple thermodynamiques et/ou mécaniques. Cela comprend des mesures de capteurs, des hypothèses prédéterminées, par exemple des hypothèses fluides, et/ou des valeurs de paramètres de calibration (par exemple des propriétés physiques, mécaniques, ou chimiques des dispositifs). Les données déterminées en S10 comprennent des mesures prises à différents emplacements du site, par exemple des mesures de pressions, de températures, ou encore de débits.

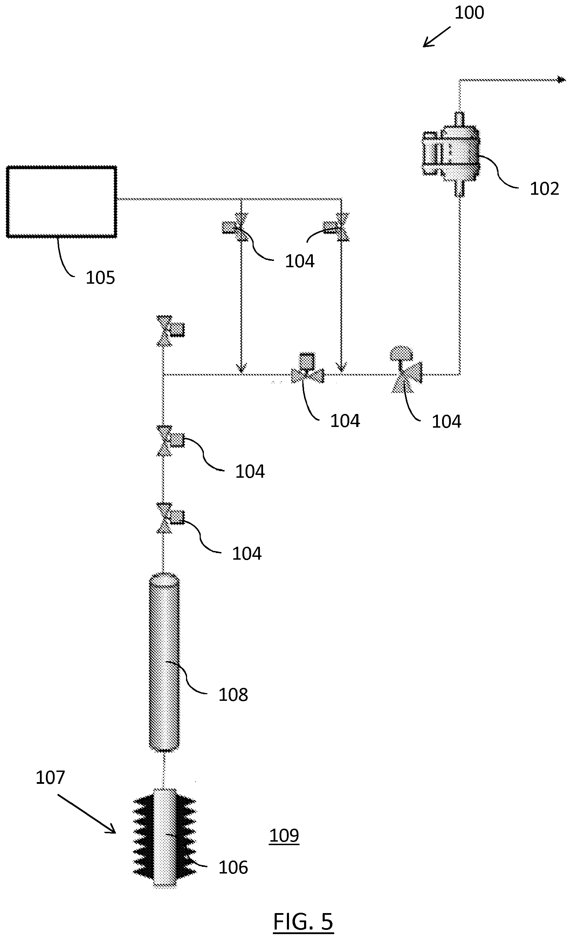

La figure 5 représente un exemple de ligne 100 sur laquelle le procédé peut être mis en œuvre. La ligne 100 comprend donc des dispositifs adaptés à fournir une estimation du débit, lesquelles comprennent le compteur métrique 102, les duses 104 (dont certaines reliées à un injecteur de méthanol 105 et/ou ne fournissant le débit qu'indirectement), le dispositif 106 associé à un module d'afflux (avec des perforations 107 dans le réservoir 109), et la conduite 108 dont seul un segment est représenté sur la figure. Cet exemple illustre une ligne de production avec tous les dispositifs habituels. Le procédé a été testé sur une installation comprenant de telles lignes de production, et il s'est révélé efficace pour améliorer l'estimation du débit fournie (par exemple par le seul compteur métrique).

Le fonctionnement de ces différents dispositifs, bien que connu de l'homme du métier, est maintenant détaillé. Les différentes données mentionnées ci-dessous et permettant d'obtenir une estimation du débit pour chaque dispositif peuvent, toutes ou au moins en partie, être impliquées dans le processus de DVR. En effet, on détaille ci-dessous, pour chaque dispositif, les données respectives à déterminer en S10 (ce sont celles pouvant être impliquées par le processus de DVR, les autres étant considérées comme constantes ou exactes, et donc n'étant généralement pas impliquées). On détaille également la séquence de calculs permettant d'aboutir à l'estimation du débit. L'ensemble de tous les calculs constituent la contrainte de la DVR, la condition d'égalité entre les estimations du débit du fluide étant entraînée par l'utilisation d'une même variable dans l'optimisation sous-jacente à la DVR décrite plus haut. Il est à noter que des données respectives à certains dispositifs sont également respectives au compteur métrique, de sorte qu'elles ne sont déterminées qu'une seule fois et qu'elles sont représentées par la même variable dans l'optimisation sous-jacente à la DVR. L'exemple où l'on effectue la DVR sur la base de tous ces modèles permet une estimation du débit après réconciliation la plus exacte possible.

Comme indiqué précédemment, la mesure réalisée par le capteur du compteur métrique sur le fluide est une mesure électrique, nucléaire et/ou optique. Ainsi, le compteur métrique peut par exemple être adapté à estimer le débit à partir de mesures de permittivité, de conductivité, d'atténuation gamma (pour plusieurs niveaux d'énergie comme expliqué précédemment), de dP (perte de charges), de pression et de température. Ces mesures peuvent être toutes impliquées par le processus de DVR. En outre, les données respectives au compteur métrique peuvent également comprendre des hypothèses fluide prédéterminées comme expliqué précédemment, comme le GOR (composition fluide réservoir dans réservoir), la salinité, les paramètres de calibration (atténuations gamma huile/eau/gaz à différents niveaux d'énergie et références de permittivités huile et gaz). Ces hypothèses peuvent également être impliquées par le processus de DVR. Le compteur métrique se base également sur des constantes pour estimer le débit, et ces constantes ne sont pas nécessairement impliquées par le processus de DVR. Il s'agit des équations permittivités huile et gaz (fonction de référence huile et gaz, Pression, Température), de la composition phase gaz, de la composition phase huile, de la géométrie Venturi, et de l'équation conductivité eau (fonction de salinité, Température, Pression). Ainsi, le modèle du compteur métrique peut calculer des fractions huile/gaz/eau suivant une fonction f(permittivité ou conductivité, atténuation gamma, Pression, Température, GOR, Salinité, composition huile, composition gaz, permittivité huile, permittivité gaz, équation permittivités huile et gaz ou équation conductivité eau, atténuations gamma huile/eau/gaz) comme indiqué précédemment. Le modèle du compteur métrique peut également calculer des densités huile / gaz/ eau suivant des fonctions f(composition huile, composition gaz, GOR, salinité, Pression, Température). Le modèle du compteur métrique peut ensuite calculer une densité mélange suivant une fonction f(densités huile/eau/gaz, fractions huile/eau/gaz), puis un débit total Qtot suivant une fonction f(dP, densité mélange, géométrie Venturi), puis des débits par phase Qhuile / Qeau / Qgaz suivant une fonction f (Qtot, fraction huile / eau / gaz).

Une duse (« choke » en anglais) est quant à elle adaptée à fournir une estimation du débit du fluide dans la ligne en fonction d'une ouverture de vanne et d'une mesure réalisée par au moins un capteur sur le fluide fournissant les pertes de charge associées à l'ouverture de vanne (typiquement deux capteurs de pression fournissant chacun une mesure de pression qui seront comparées). Ainsi, les données mesurées sont la pression en amont de la duse, la pression en aval de la duse, et le pourcentage d'ouverture de vanne sous-marine « % ouverture choke (subsea) ». Les hypothèses sont le Cv max et le pourcentage d'ouverture de vanne en surface » % ouverture choke (topside) ». Toutes ces données peuvent être impliquées par le processus de DVR. Le modèle peut également se baser sur une constante non impliquée dans la DVR : la courbe choke. Ainsi, la duse permet de fournir le débit Qtot suivant une fonction f(Pression amont, Pression aval, %ouverture choke, densité mélange, Cv max, courbe choke).

Le dispositif associé au module d'afflux (« inflow module » en anglais) est la partie du puits de production au niveau du réservoir comprenant les perforations/ouvertures/entrées pour la réception de l'hydrocarbure). Le module d'afflux est le dispositif virtuel d'afflux de l'hydrocarbure dans le puits. Un modèle d'estimation du débit est fourni pour ce dispositif virtuel par le biais de capteurs appartenant à la partie du puits de production mentionnée. Ainsi, cette partie du puits peut conceptuellement être « associée » au module d'afflux et est ainsi adapté à fournir une estimation du débit du fluide dans la ligne selon le modèle. L'estimation est faite en fonction d'une mesure de pression réalisée par au moins un capteur sur le fluide et de propriétés physico-chimiques du fluide, données pouvant toutes être impliquées dans le processus de DVR. Le module d'afflux permet d'estimer le débit en fonction de mesures, qui sont la pression fond de puits (potentiellement la pression en entrée de la conduite si la conduite est assimilée au puits) et la pression réservoir initiale. Le modèle fait également intervenir une hypothèse qui remplace la pression réservoir initiale en cours de production, à savoir la pression réservoir interpolée (fournie par le géologue). Ces données sont impliquées par la DVR. Des constantes non impliquée interviennent également : les propriétés de liaison couche-trou. Ainsi, on peut estimer le débit du fluide Qtot selon une fonction f(Pression fond de puits, Pression réservoir (initiale ou interpolée), propriétés liaison couche-trou).

La conduite (« pipe » en anglais) est adaptée à fournir une estimation du débit du fluide dans la ligne en fonction de propriétés géométrique et/ou mécaniques de la conduite et d'une mesure réalisée par au moins un capteur sur le fluide fournissant les pertes de charge et/ou de température associées aux propriétés géométrique et/ou mécaniques de la conduite. Ainsi, on mesure Pression entrée et Pression sortie, et/ou Température entrée et Température sortie, et on fait des hypothèses de propriétés mécaniques et de propriétés thermiques de la conduite. Toutes ces données peuvent être impliquées par la DVR. On se base alors sur une constante non impliquée, à savoir la géométrie du pipe, pour effectuer, et ce de manière récursive, une série de calculs permettant de converger vers une estimation de débit. Ces calculs sont ceux de la vitesse suivant une fonction f(Qtot, géométrie pipe), des conditions écoulement suivant une fonction f(composition huile, composition gaz, densité mélange, vitesse), du débit total suivant une fonction f(Pression entrée, Pression sortie, densité mélange, géométrie pipe, propriétés mécaniques, conditions écoulement) ou suivant une fonction f(Température entrée, Température sortie, densité mélange, géométrie pipe, propriétés thermiques, conditions écoulement). Cette séquence de calculs est comme indiqué précédemment récursivement répétée.

Bien entendu, l'exemple de la figure 5 permet en théorie de réconcilier de nombreuses données, avec une redondance de degré égal au nombre d'estimations disponibles. Toutefois, pour les lignes où moins de données sont recueillies, ou alors quand certaines données sont omises comme indiqué plus haut, on peut ne réconcilier qu'une combinaison des modèles décrits-ci-dessus. Dans la mesure où la ligne dispose d'un compteur métrique dont au moins une mesure brute est impliquée dans la réconciliation et qu'au moins une autre estimation que celle du compteur est disponible (par exemple selon l'un des modèles ci-dessus), le procédé améliore l'estimation fournie par le compteur métrique.

## Revendications

1. Procédé de production d'hydrocarbures sur une ligne d'une installation (60) de production d'hydrocarbures comprenant au moins deux dispositifs adaptés à fournir chacun une estimation du débit d'un fluide dans la ligne en fonction de données respectives, les dispositifs incluant au moins un compteur métrique (30, 50, 102) et les données respectives à la fourniture d'une estimation du débit par le compteur métrique (30, 50, 102) incluant une mesure réalisée par au moins un capteur (32) du compteur métrique (30, 50, 102) sur le fluide, dans lequel le procédé comprend, pendant la production :

   • la détermination (S10) des données respectives à la fourniture d'une estimation du débit par les dispositifs, et
   • un processus (S20) de réconciliation et validation de données (DVR) impliquant les données déterminées, la réconciliation étant conditionnée par une égalité au moins substantielle entre les estimations du débit du fluide à fournir par chacun des dispositifs.

2. Procédé selon la revendication 1, dans lequel le processus de réconciliation et validation de données minimise une fonction de coût pénalisant, pour chaque donnée réconciliée, la différence entre sa valeur avant réconciliation et sa valeur réconciliée.

3. Procédé selon la revendication 2, dans lequel la différence est pondérée dans la fonction de coût par une incertitude relative à ladite donnée réconciliée.

4. Procédé selon la revendication 3, comprenant en outre une détection de toute donnée réconciliée pour laquelle la différence entre sa valeur avant réconciliation et sa valeur réconciliée est supérieure à un seuil dépendant de l'incertitude relative à la donnée réconciliée.

5. Procédé selon la revendication 3 ou 4, comprenant la réitération du processus de réconciliation et validation de données en ôtant la donnée réconciliée ayant le plus de poids dans la valeur de la fonction de coût, tant que la valeur de la fonction de coût est supérieure à un seuil prédéterminé.

6. Procédé selon l'une des revendications 1-5, comprenant en outre la fourniture de la valeur réconciliée du débit de fluide dans la ligne.

7. Procédé selon la revendication 6, comprenant en outre la fourniture d'une incertitude relative à la valeur réconciliée du débit de fluide dans la ligne fonction de la différence entre sa valeur avant réconciliation et sa valeur réconciliée.

8. Procédé selon l'une des revendications 1-7, dans lequel les dispositifs comprennent, outre le compteur métrique (30, 50, 102), au moins une duse (104), un dispositif associé à un module d' afflux (106), et/ou une conduite (108).

9. Procédé selon la revendication 8, dans lequel :

   • la mesure réalisée par le capteur (32) du compteur métrique (30, 50, 104) sur le fluide est une mesure électrique, nucléaire et/ou optique,
   • la duse (104) est adaptée à fournir une estimation du débit du fluide dans la ligne en fonction d'une ouverture de vanne et d'une mesure réalisée par au moins un capteur sur le fluide fournissant les pertes de charge associées à l'ouverture de vanne,
   • le dispositif associé au module d'afflux (106) est adapté à fournir une estimation du débit du fluide dans la ligne en fonction d'une mesure de pression réalisée par au moins un capteur sur le fluide et de propriétés physico-chimiques du fluide, et/ou
   • la conduite (108) est adaptée à fournir une estimation du débit du fluide dans la ligne en fonction de propriétés géométrique et/ou mécaniques de la conduite et d'une mesure réalisée par au moins un capteur sur le fluide fournissant les pertes de charge et/ou de température associées aux propriétés géométrique et/ou mécaniques de la conduite.

10. Programme d'ordinateur, adapté à être enregistré sur une mémoire d'enregistrement de données, comprenant des instructions pour exécuter le procédé selon l'une des revendications 1-9.

11. Système adapté à communiquer avec au moins deux dispositifs adaptés à fournir chacun une estimation du débit d'un fluide dans une ligne de production d'hydrocarbures en fonction de données respectives, les dispositifs incluant au moins un compteur métrique (30, 50, 102) et les données respectives à la fourniture d'une estimation du débit par le compteur métrique (30, 50, 102) incluant une mesure réalisée par au moins un capteur (32) du compteur métrique (30, 50, 102) sur le fluide, le système comprenant une mémoire ayant enregistré le programme selon la revendication 10.

12. Installation (60) de production d'hydrocarbures, comprenant :

    • une ligne comprenant au moins deux dispositifs adaptés à fournir chacun une estimation du débit d'un fluide dans une ligne de production d'hydrocarbures en fonction de données respectives, les dispositifs incluant au moins un compteur métrique (30, 50, 102) et les données respectives à la fourniture d'une estimation du débit par le compteur métrique (30, 50, 102) incluant une mesure réalisée par au moins un capteur (32) du compteur métrique (30, 50, 102) sur le fluide, et
    • le système selon la revendication 11, le système étant adapté à communiquer avec les dispositifs de la ligne.

**Patentansprüche**

1. Verfahren zur Erzeugung von Kohlenwasserstoffen auf einer Linie einer Einrichtung (60) zur Erzeugung von Kohlenwasserstoffen, umfassend mindestens zwei Vorrichtungen, die jeweils dazu geeignet sind, eine Abschätzung des Durchflusses eines Fluids in der Linie als Funktion jeweiliger Daten bereitzustellen, wobei die Vorrichtung mindestens einen Meterzähler (30, 50, 102) umfassen, und die jeweils mit der Bereitstellung einer Abschätzung des Durchflusses durch den Meterzähler (30, 50, 102) zusammenhängenden Daten eine Messung umfassen, die von mindestens einem Sensor (32) des Meterzählers (30, 50, 102) am Fluid vorgenommen wurde, wobei das Verfahren während der Erzeugung umfasst:

    • Ermitteln (S10) der mit der Bereitstellung einer Abschätzung des Durchflusses durch die Vorrichtung zusammenhängenden Daten, und
    • einen Prozess (S20) zum Abgleich und zur Validierung von Daten (DVR) in Bezug auf die ermittelten Daten, wobei der Abgleich dadurch bedingt ist, dass die von jeder der Vorrichtung bereitgestellten Abschätzungen des Durchflusses des Fluids mindestens im Wesentlichen gleich sind.

2. Verfahren nach Anspruch 1, wobei der DVR-Prozess eine Kostenfunktion minimiert, die für alle abgeglichenen Daten den Unterschied zwischen deren Wert vor dem Abgleich und deren Abgleichswert bestraft.

3. Verfahren nach Anspruch 2, wobei der Unterschied in der Kostenfunktion durch eine Ungewissheit der abzugleichenden Daten gewichtet wird.

4. Verfahren nach Anspruch 3, ferner umfassend ein Erkennen aller abgeglichenen Daten, bei denen der Unterschied zwischen deren Wert vor dem Abgleich und deren Abgleichswert eine Schwelle übersteigt, die von der Ungewissheit der abgeglichenen Daten abhängt.

5. Verfahren nach Anspruch 3 oder 4, umfassend Wiederholen des DVR-Prozesses bei Abziehen der abgeglichenen Daten mit dem höchsten Gewicht in der Kostenfunktion, wenn der Wert der Kostenfunktion eine vorgegebene Schwelle übersteigt.

6. Verfahren nach einem der Ansprüche 1-5, ferner umfassend Bereitstellen des Abgleichswerts des Durchflusses des Fluids in der Linie.

7. Verfahren nach Anspruch 6, ferner umfassend Bereitstellen einer Ungewissheit des Abgleichswerts des Durchflusses des Fluids in der Linie als Funktion des Unterschieds zwischen dem Wert vor dem Abgleich und dem Abgleichswert.

**8.** Verfahre nach einem der Ansprüche 1-7, wobei die Vorrichtung neben dem Meterzähler (30, 50, 102) mindestens eine Düse (104), eine einem Zustrommodul (106) zugeordnete Vorrichtung und/oder eine Leitung (108) umfasst.

**9.** Verfahren nach Anspruch 8, wobei:

• es sich bei der vom Sensor (32) des Meterzählers (30, 50, 104) am Fluid vorgenommenen Messung um eine elektrische Messung, eine Kernmessung und/oder eine optische Messung handelt,
• die Düse (104) dazu geeignet ist, eine Abschätzung des Durchflusses des Fluids in der Linie als Funktion einer Ventilöffnung und einer von mindestens einem Sensor am Fluid vorgenommenen Messung, die die mit der Ventilöffnung zusammenhängenden Druckverluste angibt, bereitzustellen,
• die dem Zustrommodul (106) zugeordnete Vorrichtung dazu geeignet ist, eine Abschätzung des Durchflusses des Fluids auf der Linie als Funktion einer von mindestens einem Sensor am Fluid vorgenommenen Druckmessung und physikalisch-chemischer Eigenschaften des Fluids bereitzustellen, und/oder
• die Leitung (108) dazu geeignet ist, eine Abschätzung des Durchflusses des Fluids auf der Linie als Funktion geometrischer und/oder mechanischer Eigenschaften der Leitung und einer von mindestens einem Sensor am Fluid vorgenommenen Messung, die die mit den geometrischen und/oder mechanischen Eigenschaften der Leitung zusammenhängenden Druck- und/oder Temperaturverluste angibt, bereitzustellen.

**10.** Computerprogramm, das zur Speicherung in einem Datenspeicher geeignet ist und Befehle zur Ausführung des Verfahrens nach einem der Ansprüche 1-9 geeignet ist.

**11.** System, das dazu geeignet ist, mit mindestens zwei Vorrichtungen zu kommunizieren, die jeweils dazu geeignet sind, eine Abschätzung des Durchflusses eines Fluids auf einer Produktionslinie für Kohlenwasserstoffe als Funktion jeweiliger Daten bereitzustellen, wobei die Vorrichtungen mindestens einen Meterzähler (30, 50, 102) umfassen, und die jeweils mit der Bereitstellung einer Abschätzung des Durchflusses durch den Meterzähler (30, 50, 102) zusammenhängenden Daten eine Messung umfassen, die von mindestens einem Sensor (32) des Meterzählers (30,50, 50, 102) am Fluid vorgenommen wurde, wobei das System einen Speicher umfasst, auf dem das Programm nach Anspruch 10 gespeichert ist.

**12.** Einrichtung (60) zur Erzeugung von Kohlenwasserstoffen, umfassend:

• eine Linie, umfassend mindestens zwei Vorrichtungen, die jeweils dazu geeignet sind, eine Abschätzung des Durchflusses eines Fluids auf einer Produktionslinie für Kohlenwasserstoffe als Funktion jeweiliger Daten bereitzustellen, wobei die Vorrichtung mindestens einen Meterzähler (30, 50, 102) umfassen,
und die jeweils mit der Bereitstellung einer Abschätzung des Durchflusses durch den Meterzähler (30, 50, 102, 102) zusammenhängenden Daten eine Messung umfassen, die von mindestens einem Sensor (32) des Meterzählers (30, 50, 102) am Fluid vorgenommen wurde, und
• das System nach Anspruch 11, wobei das System zum Kommunizieren mit den Vorrichtungen der Linie geeignet ist.

## Claims

**1.** A method for producing hydrocarbons on a line of a hydrocarbon production installation (60) comprising at least two devices adapted each for providing an estimate of the flow rate of a fluid in the line based on respective data, the devices including at least one metric counter (30, 50, 102), and the data respective to the provision of an estimate of the flow rate by the metric counter (30, 50, 102) including a measurement done by at least one sensor (32) of the metric counter (30, 50, 102) on the fluid, wherein the method comprises, during the production:

• determining (S10) the data respective to the provision of an estimate of the flow rate by the devices, and
• a data reconciliation and validation (DVR) process (S20) involving the determined data, the reconciliation being conditioned by an at least substantial equality between the estimates of the flow rate of the fluid to be provided by each of the devices.

**2.** The method according to claim 1, wherein the data reconciliation and validation process minimizes a cost function penalizing, for each reconciled datum, the difference between its value before reconciliation and its reconciled value.

**3.** The method according to claim 2, wherein the difference is weighted in the cost function by an uncertainty relative to said reconciled datum.

4. The method according to claim 3, further comprising a detection of any reconciled datum for which the difference between its value before reconciliation and its reconciled value is above a threshold depending on the uncertainty relative to the reconciled datum.

5. The method according to claim 3 or 4, comprising reiterating the data reconciliation and validation process, removing the reconciled datum with the greatest weight in the value of the cost function, as long as the value of the cost function is above a predetermined threshold.

6. The method according to one of claims 1-5, further comprising providing the reconciled value of the fluid flow rate in the line.

7. The method according to claim 6, further comprising providing an uncertainty relative to the reconciled value of the fluid flow rate in the line depending on the difference between its value before reconciliation and its reconciled value.

8. The method according to one of claims 1-7, wherein aside from the metric counter (30, 50, 102), the devices comprise at least one choke (104), a device associated with an inflow module (106), and/or a pipe (108).

9. The method according to claim 8, wherein:

   • the measurement done by the sensor (32) of the metric counter (30, 50, 104) on the fluid is an electric, nuclear and/or optical measurement,
   • the choke (104) is adapted for providing an estimate of the flow rate of the fluid in the line based on a valve opening and a measurement done by at least one sensor on the fluid supplying the pressure losses associated with the valve opening,
   • the device associated with the inflow module (106) is adapted for providing an estimate of the flow rate of the fluid in the line based on a pressure measurement done by at least one sensor on the fluid and physicochemical properties of the fluid, and/or
   • the pipe (108) is adapted for providing an estimate of the flow rate of the fluid in the line based on geometric and/or mechanical properties of the pipe and a measurement done by at least one sensor on the fluid supplying the pressure and/or temperature losses associated with the geometric and/or mechanical properties of the pipe.

10. A computer program, recordable on a data storage memory, comprising instructions for carrying out the method according to one of claims 1-9.

11. A system adapted for communicating with at least two devices adapted each for providing an estimate of the flow rate of a fluid in a hydrocarbon production line based on respective data, the devices including at least one metric counter (30, 50, 102), and the data respective to the provision of an estimate of the flow rate via the metric counter (30, 50, 102) including a measurement done by at least one sensor (32) of the metric counter (30, 50, 102) on the fluid, the system comprising a memory having recorded the program according to claim 10.

12. A hydrocarbon production installation (60), comprising:

   • a line comprising at least two devices adapted each for providing an estimate of the flow rate of a fluid in a hydrocarbon production line based on respective data, the devices including at least one metric counter (30, 50, 102), and the data respective to the provision of an estimate of the flow rate via the metric counter (30, 50, 102) including a measurement done by at least one sensor (32) of the metric counter (30, 50, 102) on the fluid, and
   • the system according to claim 11, the system being adapted for communicating with the devices of the line.

détermination des données respectives à la fourniture
d'une estimation du débit par les dispositifs

S10

processus de réconciliation et validation de données (DVR)
impliquant les données déterminées, la réconciliation
étant conditionnée par une égalité au moins substantielle
entre les estimations du débit du fluide à fournir par
chacun des dispositifs

S20

FIG. 1

$\alpha_1$

100% gaz

20

100% huile

100% eau
(eau salée)

$\alpha_2$

FIG. 2

30

32

34

FIG. 3

FIG. 4

100

102

105

104

104

104

104

104

107

108

106

109

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007116008 A1

**Littérature non-brevet citée dans la description**

- Data Reconciliation in Flow Measurement. Oil & Gas Focus Group. TÜV SUD National Engineering Laboratory, 09 Juin 2010